# FASCICULE DE BREVET EUROPEEN

(11) **EP 4 401 955 B1**
(45) Date de publication et mention de la délivrance du brevet: **18.11.2026**
(21) Numéro de dépôt: 22789182.7
(22) Date de dépôt: 14.09.2022
(51) Int. Cl.: B29C 70/54, B29C 70/48

(54) **PROCÉDÉ DE FABRICATION D'UNE PIÈCE EN MATÉRIAU COMPOSITE**
VERFAHREN ZUR HERSTELLUNG EINES VERBUNDWERKSTOFFTEILS
METHOD FOR PRODUCING A COMPOSITE MATERIAL PART

(30) Priorité: 14.09.2021 FR 2109641
(43) Date de publication de la demande: 24.07.2024
(73) Titulaire: Institut de Recherche Technologique Jules Verne, 44340 Bouguenais (FR)
(72) Inventeur: KNEVELER, Matthieu, 44860 Pont Saint Martin (FR)
(74) Mandataire: Ipsilon
(86) Numéro de dépôt international: PCT/EP2022/075485
(87) Numéro de publication internationale: WO 2023/041559

(56) Documents cités:
- EP-A1- 2 647 492
- EP-A1- 3 124 243
- EP-A1- 3 290 192
- DE-A1- 102014 017 809
- US-A1- 2013 280 483

## Description

### Domaine technique

La présente invention concerne le domaine de la fabrication de pièces en matériau composite, notamment pour le secteur aéronautique. En particulier, la présente invention concerne un procédé de fabrication, à partir d'une préforme fibreuse, d'une pièce en matériau composite, ainsi qu'une installation pour la fabrication d'une pièce en matériau composite et une pièce obtenue par la mise en œuvre de ce procédé.

### Technique antérieure

Pour réaliser des pièces en matériau composite à partir d'une préforme fibreuse, il existe notamment deux types de procédé connus.

Un premier type de procédé, dit procédé par injection (ou RTM pour Resin Transfer Moulding en anglais qui signifie moulage par transfert de résine), consiste à placer une préforme fibreuse dans un outillage rigide fermé puis à y injecter, au travers d'orifices formés dans l'outillage, une résine polymère sous une pression supérieure à 3 bars relativement à la pression atmosphérique. Une fois la préforme fibreuse complètement imprégnée, la résine est polymérisée, par exemple par chauffage. Ce procédé fonctionne bien pour la réalisation en série de pièces de petite et moyenne taille.

Cependant, pour la réalisation de grandes pièces, l'installation nécessaire est très complexe à concevoir et coûteuse, car la pression d'injection de la résine est très importante, ce qui nécessite un moule de grande dimension, renforcé, capable de reprendre les efforts de pression sans se déformer de manière significative.

Pour la fabrication de grandes pièces, il est connu d'utiliser un second type de procédé, dit procédé par infusion de résine (ou LRI pour Liquid Resin Infusion en anglais pour infusion de résine liquide). Dans celui-ci, une préforme fibreuse est déposée dans un moule ouvert avec un drainant. Une bâche est ensuite plaquée, grâce à un système d'aspiration, sur le moule, la préforme fibreuse et le drainant, le système d'aspiration créant un vide entre la bâche et le moule. La résine polymère est alors injectée, sans pression, entre le moule et la bâche, la résine étant aspirée de manière surfacique afin d'imprégner la préforme fibreuse. Le drainant aide à la bonne imprégnation par la résine de la préforme fibreuse. US 2013/280483 A1 divulgue les caractéristiques du préambule de la revendication 12 et un procédé de fabrication à partir d'une préforme fibreuse, d'une pièce en matériau composite dans un outillage comportant une première et une deuxième coquille et pouvant être ouvert ou fermé, le procédé comportant disposer dans l'outillage ouvert la préforme fibreuse et au moins un élément de drainage recouvrant au moins partiellement, inférieurement et/ou supérieurement, la préforme, fermer l'outillage, injecter, à une pression basse, un matériau polymère dans l'outillage par au moins un orifice réalisé dans la première coquille de manière à imprégner au moins partiellement la préforme fibreuse avec ledit matériau polymère injecté et provoquer la polymérisation dudit matériau polymère injecté de manière à former la pièce.

Ce deuxième type de procédé ne permet pas une production de pièces en série de manière efficace et à bonne cadence. De plus, ce type de procédé ne permet pas un contrôle précis de l'épaisseur locale de la pièce finale. Enfin, la bâche et le drainant ne peuvent être utilisés que pour une seule infusion ce qui génère des déchets.

Il existe ainsi un besoin de disposer d'une installation et d'un procédé permettant la fabrication en série de grandes pièces en matériau composite et permettant de limiter les déchets de production.

### Exposé de l'invention

La présente invention y parvient en tout ou partie grâce à, selon l'un de ses aspects, un procédé de fabrication, à partir d'une préforme fibreuse, d'une pièce en matériau composite dans un outillage comportant une première et une deuxième coquilles et pouvant être ouvert ou fermé, le procédé comportant les étapes suivantes :
- Etape a : disposer dans l'outillage ouvert la préforme fibreuse et au moins un élément de drainage recouvrant au moins partiellement, inférieurement et/ou supérieurement, la préforme, ledit au moins un élément de drainage étant fabriqué dans l'outillage,
- Etape b : fermer l'outillage,
- Etape c : injecter, à une pression basse, un matériau polymère dans l'outillage par au moins un orifice réalisé dans la première coquille de manière à imprégner au moins partiellement la préforme fibreuse avec ledit matériau polymère injecté, et
- Etape d : provoquer la polymérisation dudit matériau polymère injecté de manière à former la pièce.

Par « pression basse », on entend une pression inférieure à la pression habituellement utilisée pour la réalisation de pièces avec le procédé RTM, notamment une pression strictement inférieure à 3 bars, notamment inférieure à 2 bars, de préférence proche de la pression atmosphérique.

Etant donné que la pression d'injection est basse, le besoin de reprise des efforts de pression sur la première et la deuxième coquilles est limité. La conception de l'outillage peut être ainsi facilitée ce qui permet notamment d'en réduire le coût. En particulier, on peut, grâce à l'invention, réaliser un outillage pour des pièces de grandes dimensions dont la conception et la manipulation sont simplifiées.

De plus, grâce à l'invention, la quantité de déchets générés lors la fabrication d'une pièce en matériau composite est limitée.

Grâce à l'élément de drainage, l'imprégnation de la préforme fibreuse est rapide. A titre de comparaison, l'imprégnation de la préforme fibreuse avec le procédé selon l'invention peut être au moins deux fois plus rapide qu'avec un procédé RTM de l'art antérieur.

Sauf indication contraire, par « pression », on entend une pression relative à la pression atmosphérique.

La première coquille peut être un moule et la deuxième coquille un contre-moule.

En variante, la première coquille est un contre-moule et la deuxième coquille un moule.

Au moins l'une des coquilles forme de préférence une cavité ouverte destinée à recevoir, au moins partiellement, la préforme fibreuse et au moins un élément de drainage. Lorsque l'outillage est ouvert, cette cavité ouverte est avantageusement accessible pour y déposer la préforme fibreuse et ledit au moins un élément de drainage. Lorsque l'outillage est fermé, les coquilles peuvent coopérer de manière à fermer la cavité, cette cavité fermée pouvant contenir la préforme fibreuse et ledit au moins un élément de drainage.

Les coquilles sont de préférence rigides, c'est-à-dire qu'elles gardent leur forme et ne se déforment pas, ou très peu, lors de leur manipulation et lors de la mise en œuvre du procédé.

Au cours de l'étape c, on fait de préférence le vide dans l'outillage au travers d'au moins un évent d'aspiration réalisé dans la deuxième coquille, notamment avant et/ou simultanément à l'injection.

Par « on fait le vide dans l'outillage », on entend que la pression à l'intérieur de l'outillage relativement à la pression atmosphérique est négative, notamment comprise entre - 1 et -0,5 bar. Faire le vide dans l'outillage favorise la réalisation d'une pièce de bonne qualité.

Le procédé peut comporter une étape consistant à ouvrir l'outillage avant l'étape a.

L'étape a consistant à disposer ledit au moins un élément de drainage dans l'outillage comporte la fabrication dans l'outillage dudit au moins un élément de drainage, notamment par un procédé de fabrication additive.

En particulier, ledit au moins un élément de drainage peut être fabriqué dans le moule ou le contre-moule.

Fabriquer ledit au moins un élément de drainage dans l'outillage permet de faciliter la production en série de pièces en matériau composite.

De plus, cela permet de fabriquer une pièce en matériau composite ayant une forme complexe, par exemple avec une double courbure, qui ne pourrait pas être réalisée de manière acceptable si l'élément de drainage n'est pas fabriqué à la forme de la première et/ou de la deuxième coquille.

Ledit au moins un élément de drainage peut comporter des ajours, et former notamment une grille, de manière à favoriser une circulation du matériau polymère injecté au sein de l'élément de drainage au cours de l'étape c.

Les ajours peuvent modifier localement la perméabilité dudit au moins un élément de drainage.

Ledit au moins un élément de drainage peut avoir une épaisseur variable.

Ledit au moins un élément de drainage peut avoir une épaisseur comprise entre 0,1 mm et 2 mm.

La densité surfacique dudit au moins un élément de drainage peut être comprise entre 20 g/m² et 500 g/m², de préférence entre 40 g/m² et 300 g/m².

De préférence, un unique élément de drainage est utilisé de chaque côté de la préforme.

Ledit au moins un élément de drainage peut être réalisé en un matériau polymère thermoplastique.

Ledit au moins un élément de drainage peut comporter un matériau polymère thermoplastique, de préférence choisi dans le groupe constitué par un acrylonitrile butadiène styrène (ABS), un polytéréphtalate d'éthylène (PET), un polyétherimide (PEI) et un mélange de ceux-ci.

Le matériau polymère injecté peut comporter un matériau polymère thermodurcissable, notamment un polyépoxyde, un vinylester, un polyester et un mélange de ceux-ci.

Le matériau polymère injecté peut être, avant et pendant son injection, sous une forme liquide, étant notamment non-polymérisé, par exemple sous forme de monomères et/ou de prépolymères.

Lorsque le ou les éléments de drainage est(sont) réalisé(s) en un matériau polymère thermoplastique, l'étape d peut comporter le chauffage du matériau polymère injecté à une température supérieure à la température de fusion du matériau polymère thermoplastique dudit au moins un élément de drainage.

Lorsque ledit au moins un l'élément de drainage est réalisé dans un matériau polymère thermoplastique compatible avec le matériau polymère injecté, celui-ci peut faire partie de la pièce obtenue après cette étape de chauffage. Dans ce cas, ledit au moins un élément de drainage ne génère pas de déchet à la fin du procédé, étant donné qu'il fait partie de la pièce en matériau composite. Par exemple, le ou les éléments de drainage peuvent être réalisés en un acrylonitrile butadiène styrène (ABS) qui est un matériau polymère thermoplastique compatible avec un polyépoxyde, lequel peut former le matériau polymère injecté.

Lorsque ledit au moins un élément de drainage est réalisé dans un matériau polymère thermoplastique incompatible avec le matériau polymère injecté, celui-ci ne fait de préférence pas partie de la pièce obtenue après cette étape de chauffage. Cependant, ledit au moins un élément de drainage fondu et refroidi peut alors être aisément retiré de l'outillage et/ou de la pièce puis recyclé, par exemple pour former un nouvel élément de drainage. Par exemple, le ou les éléments de drainage sont réalisés en un polytétrafluoroéthylène (PTFE) qui est un matériau polymère thermoplastique incompatible avec une résine polyépoxyde, laquelle peut former le matériau polymère injecté.

Dans les deux cas, ledit au moins un élément de drainage peut ne pas générer de déchet à la fin du procédé.

Lorsque le ou les éléments de drainage est(sont) réalisé(s) en un matériau polymère thermoplastique, au cours de l'étape c, le matériau polymère injecté peut être chauffé à une température inférieure à la température de fusion du matériau polymère thermoplastique dudit au moins un élément de drainage.

Dans ce cas, le matériau polymère injecté peut être chauffé avant son injection et/ou dans l'outillage.

Chauffer le matériau polymère injecté peut réduire la viscosité de celui-ci et ainsi faciliter son injection.

Par exemple, le matériau polymère injecté est chauffé au moment de l'injection à l'aide d'une machine d'injection équipée d'un pot chauffant. Après injection, le matériau polymère injecté peut être chauffé à une température supérieure provoquant la polymérisation.

La préforme fibreuse peut être prise en sandwich entre deux éléments de drainage, c'est-à-dire qu'un élément de drainage est disposé en-dessous de la préforme fibreuse du côté de la première coquille et un autre au-dessus du côté de la deuxième coquille.

Dans ce cas, l'élément de drainage disposé en-dessous va, lors de l'injection du matériau polymère injecté, se remplir rapidement avec ce dernier et les gaz contenus dans l'élément de drainage disposé au-dessus vont être aspirés. Autrement dit, l'élément de drainage disposé en dessous draine le matériau polymère injecté, notamment la résine, tandis que l'élément de drainage disposé au-dessus draine l'air. De cette manière, l'imprégnation de la préforme fibreuse en matériau polymère injecté se fait de la première coquille vers la deuxième coquille, par exemple de bas en haut, c'est-à-dire depuis l'élément de drainage disposé du côté de la première coquille vers l'élément de drainage disposé du côté de la deuxième coquille.

La préforme fibreuse comporte avantageusement des fibres longues, en particulier lorsque la pièce fabriquée est structurale. Cependant, l'imprégnation d'une préforme fibreuse avec des fibres longues est plus complexe qu'avec des fibres courtes. Le procédé selon l'invention permet de faciliter l'imprégnation de telles préformes fibreuses.

La préforme fibreuse peut comporter des fibres choisies dans le groupe constitué par les fibres de verre, de carbone, d'aramide, notamment de kevlar^{®}, des fibres végétales, par exemple de lin, et un mélange de celles-ci, de préférence des fibres de carbone et/ou de verre.

La préforme fibreuse peut se présenter sous la forme d'un tissu, d'un tricot, d'un unidirectionnel ou un mélange de ceux-ci.

Le procédé peut comporter une étape de démoulage de la pièce, cette étape pouvant comprendre l'ouverture de l'outillage.

L'étape de démoulage peut comporter le retrait d'au moins un élément de drainage, ce dernier ne faisant pas partie de la pièce. Cela peut être le cas par exemple lorsque ledit au moins un élément de drainage est réalisé dans un matériau polymère thermoplastique incompatible avec le matériau polymère injecté.

Ledit au moins un élément de drainage peut comporter un relief.

Dans ce cas, un tel relief peut former, au cours de l'étape d, un relief correspondant de la pièce.

Un tel relief peut modifier au moins localement, au cours de l'étape c, la vitesse de circulation du matériau polymère dans l'outillage, c'est-à-dire l'accélérer ou la freiner.

Le relief est par exemple une surépaisseur locale, un creux, un canal. Un canal pourra accélérer la vitesse de circulation du matériau polymère tandis qu'un relief formant barrière pourra au contraire freiner cette vitesse.

Ladite préforme fibreuse peut avoir une zone de variation de perméabilité, notamment lorsqu'elle présente un relief ou une zone de variation de densité fibreuse.

Dans ce cas, au moins un élément de drainage peut comporter au moins un relief en regard de la zone de perméabilité variable. Par exemple, si la préforme comporte une zone de perméabilité réduite, au moins un élément de drainage peut comporter au moins un relief pour ralentir la vitesse de circulation du matériau polymère injecté.

Lorsqu'au moins un élément de drainage est positionné au-dessus de la préforme fibreuse du côté de la deuxième coquille, ce ou ces éléments de drainage peu(ven)t comporter une surépaisseur locale, notamment au niveau dudit au moins un évent le cas échéant, afin de ralentir la vitesse de circulation du matériau polymère vers ledit au moins un évent.

Ledit au moins un élément de drainage peut comporter une surépaisseur locale, notamment à une extrémité, destinée à former une surépaisseur locale de la pièce après la mise en œuvre du procédé.

Ledit au moins un élément de drainage peut comporter un creux permettant d'accélérer localement la vitesse de circulation du matériau polymère, notamment afin d'augmenter localement l'imprégnation d'au moins une partie de la préforme fibreuse.

### Installation pour la fabrication

L'invention a encore pour objet, selon un autre de ses aspects, indépendamment ou en combinaison avec ce qui précède, une installation pour la fabrication d'une pièce en matériau composite à partir d'une préforme fibreuse, l'installation comportant un outillage pouvant être ouvert ou fermé comportant :
- Une première coquille,
- Une deuxième coquille,
- la première et/ou la deuxième coquilles, de préférence la première coquille, étant configurée pour recevoir la préforme et au moins un élément de drainage,
- un système d'injection agencé pour injecter, dans au moins un orifice réalisé dans la première coquille, un matériau polymère à une pression basse, notamment une pression inférieure ou égale à 3 bars, mieux inférieure à 2 bars, notamment proche de la pression atmosphérique et un dispositif de fabrication additive configuré pour fabriquer ledit au moins un élément de drainage directement dans le outillage.

Etant donné que la pression d'injection est basse, notamment strictement inférieure à 3 bars, mieux inférieure à 2 bars, notamment proche de 1 bar relativement à la pression atmosphérique, le besoin de reprise des efforts de pression sur les coquilles est limité, ce qui permet de simplifier la conception et de limiter le coût de fabrication de l'outillage. En particulier, cela permet de réaliser un outillage pour des pièces de grande taille dont la conception et la manipulation sont simplifiées.

Ledit au moins un élément de drainage est fabriqué dans la première ou la deuxième coquille de manière à présenter une forme adaptée à la forme de leur cavité.

Fabriquer ledit au moins un élément de drainage dans l'outillage permet de faciliter la production en série de pièces en matériau composite.

De plus, cela permet de fabriquer une pièce en matériau composite ayant une forme complexe, par exemple avec une double courbure, avec des variations de courbure ou encore avec des changements de sens de courbure, qui ne pourrait pas être réalisée de manière acceptable si l'élément de drainage n'est pas fabriqué à la forme de la première ou de la deuxième coquille.

L'installation comporte de préférence un système d'aspiration, agencé pour faire le vide dans l'outillage au travers d'au moins un évent d'aspiration réalisé dans la deuxième coquille.

La première coquille peut comporter un ou plusieurs orifices pour permettre l'injection dudit matériau polymère.

Par exemple, la première coquille peut, dans le plan de la préforme, comporter un orifice par mètre carré. Bien évidemment, le nombre et la répartition des orifices peuvent être différents en fonction de la forme et de l'épaisseur de la pièce à produire.

La deuxième coquille peut comporter un ou plusieurs évents d'aspiration, de préférence plusieurs évents d'aspiration.

La deuxième coquille comporte de préférence au moins autant d'évents que d'orifices dans la première coquille.

Lorsqu'il y a au moins deux orifices dans la première coquille, chaque évent est de préférence à équidistance des deux orifices les plus proches.

L'installation peut comporter un système de chauffage configuré pour chauffer la préforme fibreuse et ledit au moins un élément de drainage.

Le système de chauffage peut être compris dans la première et/ou la deuxième coquille(s), par exemple avec un système électrique comportant notamment une résistance.

Le système de chauffage peut en variante être externe à l'outillage, par exemple sous la forme d'un autoclave dans lequel l'outillage peut être disposé.

L'installation est de préférence dépourvue de bâche à vide, notamment afin de limiter le nombre de déchets produits.

L'installation peut comporter une membrane recouvrant au moins ledit au moins un évent, ladite membrane étant perméable aux gaz et imperméable au matériau polymère injecté, par exemple une membrane VAP (pour Vacuum Assisted Process en anglais, c'est-à-dire procédé assisté par le vide).

### Pièce en matériau composite

L'invention a encore pour objet, selon un autre de ses aspects, en combinaison avec ce qui précède, une pièce obtenue par la mise en œuvre du procédé tel que défini plus haut et/ou réalisée à l'aide d'une installation telle que définie plus haut, la pièce comportant au moins une couche extérieure formée par ledit au moins un élément de drainage et une couche intérieure comportant ledit matériau polymère injecté et un renfort fibreux. De préférence, la pièce comporte deux couches extérieures formées par deux dits éléments de drainage entourant la couche intérieure.

Ladite au moins une couche extérieure peut comporter un matériau polymère thermoplastique obtenu par la fusion dudit au moins un élément de drainage. Lorsque ce matériau polymère thermoplastique est compatible avec le matériau polymère injecté, ladite au moins une couche extérieure est avantageusement solidaire de la pièce.

Une telle couche extérieure en matériau polymère thermoplastique peut permettre de former une couche d'absorption de chocs de la pièce et ainsi renforcer sa résistance et donc augmenter sa durée de vie.

Ladite au moins une couche extérieure peut servir de revêtement extérieur à la pièce, par exemple en remplacement d'une étape de peinture généralement mise en œuvre sur des pièces réalisées dans l'art antérieur.

Le renfort fibreux comporte des fibres issues de la préforme fibreuse.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel
[Fig 1] la figure 1 illustre en schéma bloc des étapes d'un exemple de procédé de fabrication d'une pièce en matériau composite selon l'invention,
[Fig 2] la figure 2 illustre partiellement, de manière schématique, en coupe transversale, un exemple d'outillage d'une installation selon l'invention lors la mise en œuvre d'une étape du procédé de la figure 1,
[Fig 3] la figure 3 illustre, en vue de dessus, de manière schématique, l'élément de drainage de la figure 2 disposé du côté de la première coquille,
[Fig 4] la figure 4 illustre, en vue de dessus, de manière schématique, l'élément de drainage de la figure 2 disposé du côté de la deuxième coquille,
[Fig 5] la figure 5 illustre, de manière schématique, en coupe transversale, l'outillage de la figure 2 lors de la mise en œuvre d'une autre étape du procédé de la figure 1,
[Fig 6] la figure 6 est un graphique représentant un exemple d'évolution de la température dans l'outillage des figures 2 et 5 au cours du procédé de la figure 1,
[Fig 7] la figure 7 est un graphique représentant un exemple d'évolution du débit et de la quantité de matériau polymère injecté dans l'outillage des figures 2 et 5 au cours de l'étape d'injection du procédé de la figure 1,
[Fig 8] la figure 8 illustre, de manière schématique, en coupe transversale, l'outillage de la figure 2 lors de la mise en œuvre d'une autre étape du procédé de la figure 1,
[Fig 9] la figure 9 illustre, de manière schématique, un exemple d'installation selon l'invention,
[Fig 10] la figure 10 est une photographie, en perspective, d'un exemple de pièce en matériau composite selon l'invention,
[Fig 11] la figure 11 est une photographie, en vue de dessous, d'un autre exemple de pièce en matériau composite selon l'invention,
[Fig 12] la figure 12 est une photographie, en vue de dessus, de la pièce en matériau composite de la figure 11, et
[Fig 13] la figure 13 est une vue schématique et en perspective d'un autre exemple de pièce en matériau composite selon l'invention.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

Sur les figures, les proportions réelles n'ont pas toujours été respectées, dans un souci de clarté.

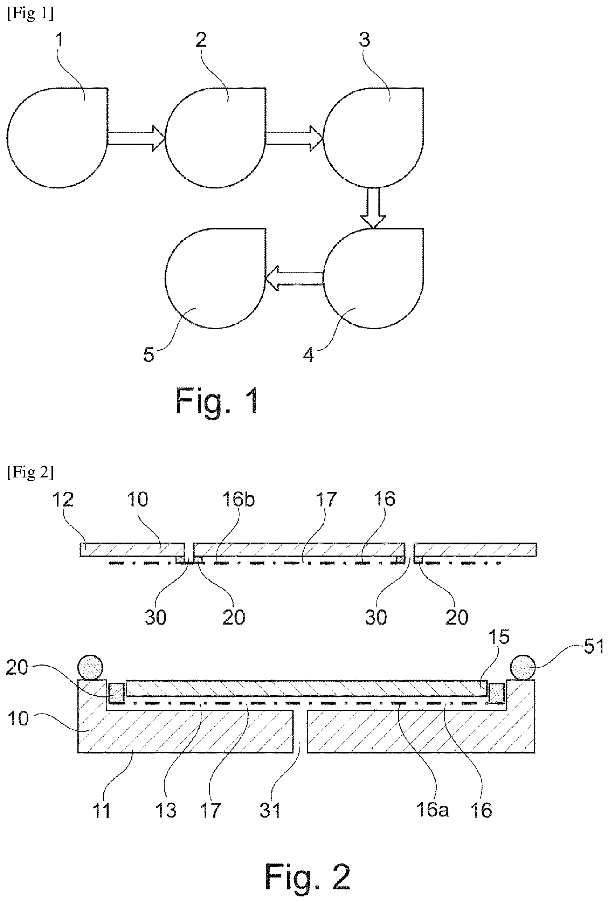

On a illustré à la figure 1 un exemple de procédé selon l'invention de fabrication d'une pièce en matériau composite dans un outillage 10, visible sur la figure 2, comportant une première coquille11 et une deuxième coquille 12, toutes deux rigides, et pouvant être ouvert ou fermé.

Une première étape 1, dont l'installation correspondante est illustrée sur la figure 2, consiste à disposer, dans l'outillage 10, une préforme 15 fibreuse et au moins un élément de drainage 16, dans cet exemple deux éléments de drainage 16, l'un recouvrant inférieurement et l'autre recouvrant supérieurement la préforme 15.

Dans cet exemple, la première coquille 11 comporte une cavité ouverte 13 recevant la préforme 15 et un élément de drainage 16, noté 16a, l'autre élément de drainage 16, noté 16b, étant disposé dans la deuxième coquille 12.

La préforme 15 comporte, dans cet exemple, des fibres longues de kevlar^{®} et se présente sous la forme d'un tissé.

L'étape 1 comporte, dans cet exemple, la fabrication dans la première coquille 11 de l'un des éléments de drainage 16 et dans la deuxième coquille 12 de l'autre élément de drainage 16 en mettant en œuvre un procédé de fabrication additive, par exemple par une impression 3D par extrusion d'un matériau polymère thermoplastique porté sur un chariot 3-axes comme par exemple un robot.

Chaque élément de drainage 16 se présente dans cet exemple sous la forme d'une grille comportant des ajours 17. Chaque élément de drainage 16 est réalisé en un matériau polymère thermoplastique, dans cet exemple en un acrylonitrile butadiène styrène (ABS).

Les deux éléments de drainage 16 ont, dans cet exemple, une densité surfacique de 300 g/m² et une épaisseur comprise entre 0,1 mm et 2 mm.

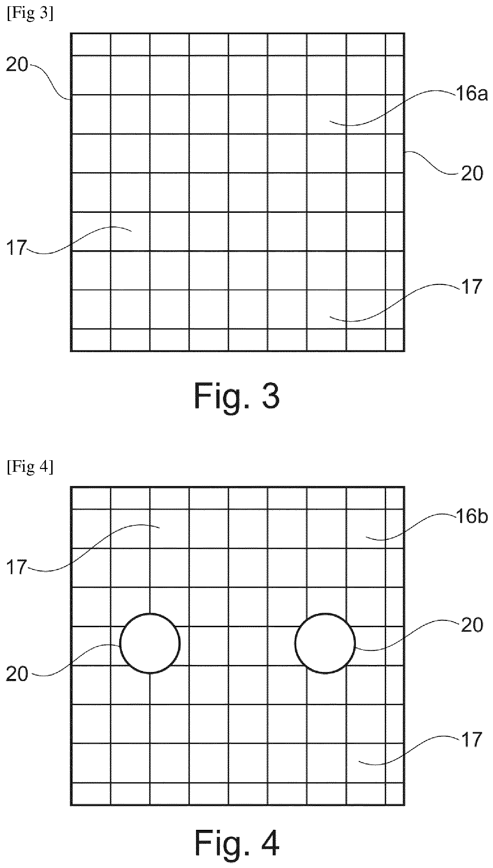

En l'espèce, l'élément de drainage 16a disposé en-dessous de la préforme 15, et visible de manière isolée sur la figure 3, présente une forme plane et a une épaisseur constante sur la totalité de sa surface à l'exception de ses bords extérieurs qui comportent un relief 20, comme visible sur la figure 2, dans cet exemple une surépaisseur destinée à former une surépaisseur locale de pièce après la mise en œuvre du procédé.

Quant à l'élément de drainage 16b disposé au-dessus de la préforme 15 du côté de la deuxième coquille 12, et visible isolément sur la figure 4, il comporte dans cet exemple des reliefs 20, au nombre de deux, formant une surépaisseur locale en forme de cercle disposés au niveau d'évents 30 de la deuxième coquille 12.

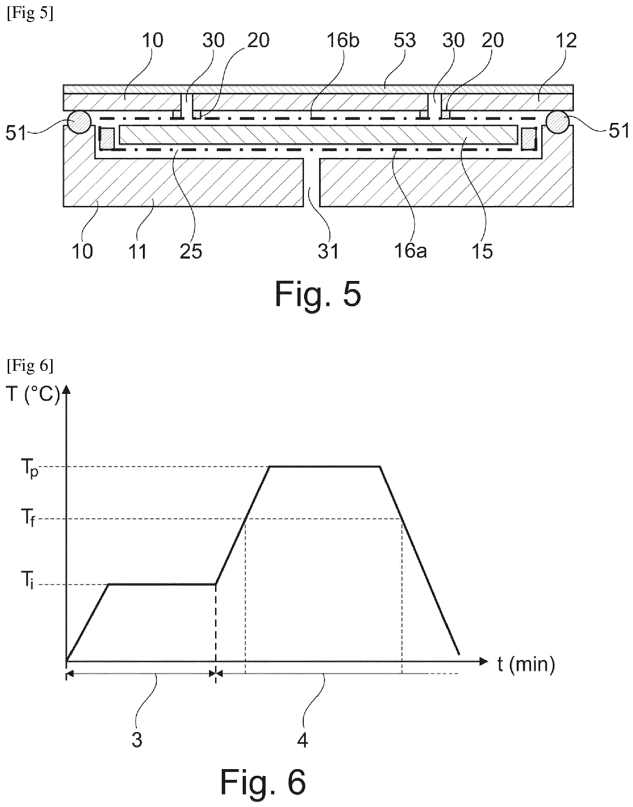

Dans une deuxième étape 2, l'outillage 10 est fermé, comme illustré sur la figure 5, de manière à faire coopérer le première coquille 11 et la deuxième coquille 12 et former une cavité fermée 25 contenant la préforme 15 et les éléments de drainage 16.

Dans une troisième étape 3 du procédé, le vide est fait dans l'outillage 10 par aspiration au travers des évents 30, dans cet exemple au nombre de deux, réalisés dans la deuxième coquille 12. En particulier, les gaz contenus dans l'élément de drainage 16b disposé au-dessus de la préforme 15 vont être aspirés plus rapidement.

En parallèle, un matériau polymère est injecté dans l'outillage 10 par un orifice 31 réalisé dans la première coquille 11 à une pression basse, notamment strictement inférieure à 3 bars relativement à la pression atmosphérique, dans cet exemple à une pression égale à la pression atmosphérique.

L'élément de drainage 16a disposé sous la préforme 15 du côté de la première coquille11 va, lors de l'injection du matériau polymère injecté, se remplir rapidement avec ce dernier.

De cette manière, la préforme 15 fibreuse est au moins partiellement imprégnée en matériau polymère injecté du bas vers le haut, c'est-à-dire depuis l'élément de drainage 16a disposé du côté de la première coquille 11 vers l'élément de drainage 16b disposé du côté de la deuxième coquille 12.

Une fois que le matériau polymère injecté a traversé la préforme 15, il circule dans l'élément de drainage 16b. Les reliefs 20 entourant les évents 30 permettent alors de ralentir la circulation du matériau polymère vers les évents 30, et ainsi limiter son aspiration.

Le matériau polymère injecté est dans cet exemple du polépoxyde, aussi connu sous le nom d'époxy, et se présente sous une forme liquide de monomères non-polymérisés.

Comme illustré sur la figure 6, le matériau polymère injecté est, dans cet exemple, chauffé à une température Tᵢ, dans cet exemple de 130°C, température inférieure à la température de fusion T_{f} du matériau polymère thermoplastique des éléments de drainage 16, qui est de 200°C dans cet exemple. Le chauffage est réalisé avant l'injection à une température de 90°C et dans l'outillage 10 à une température de 130°C de manière à permettre une diminution de la viscosité du matériau polymère injecté.

Comme visible, la montée en température est réalisée de manière progressive jusqu'à atteindre la température Tᵢ de 130°C puis cette température est maintenue pendant toute la durée de l'injection, étape 3.

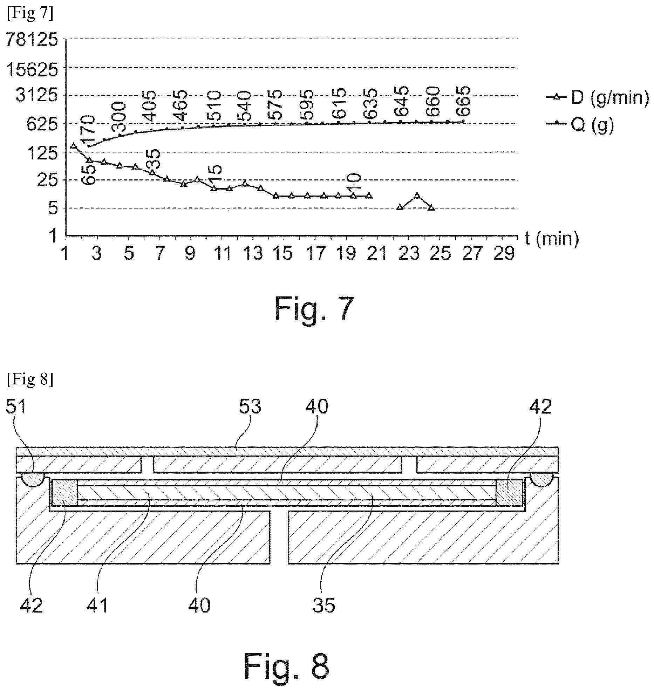

Comme visible sur la figure 7, le débit D d'injection du matériau polymère injecté est d'environ 125 g/min au début de l'injection puis diminue au cours de l'injection jusqu'à un plateau d'environ 15 g/min. La quantité Q de matériau polymère injecté suit en parallèle une courbe logarithmique jusqu'à atteindre 665 g de résine.

L'injection est ici réalisée en 27 min environ. A titre de comparaison, le temps nécessaire pour imprégner une préforme fibreuse identique avec le même matériau polymère avec un procédé RTM de l'art antérieur demande environ 60 min, soit deux fois plus de temps qu'avec le procédé selon l'invention.

Ensuite, dans une quatrième étape 4, la polymérisation du matériau polymère injecté est provoquée de manière à former une pièce 35. Cette étape 4 comporte le chauffage de la cavité 25 comportant à ce stade les deux éléments de drainage 16 et la préforme fibreuse 15 imprégnée du matériau polymère injecté.

Comme visible sur la figure 6, après l'étape 3, la montée en température à l'intérieur de l'outillage 10 est croissante jusqu'à atteindre une température de polymérisation Tₚ , dans cet exemple de 220°C. La température de polymérisation Tₚ est supérieure à la température de fusion T_{f} du matériau polymère thermoplastique des éléments de drainage 16. Ainsi, lors de l'augmentation de la température dans l'outillage 10, le matériau polymère thermoplastique des éléments de drainage 16 passe dans un état de fusion.

La température à l'intérieur de l'outillage 10 est maintenue sur un plateau à la température de polymérisation Tₚ. Ce plateau permet la formation de chaînes polymères dans le matériau polymère injecté dans la préforme 15 fibreuse et ainsi de rigidifier le matériau polymère injecté.

Ensuite, comme visible sur la figure 6, la température à l'intérieur de l'outillage 10 est abaissée jusqu'à la température ambiante de la pièce, par exemple par refroidissement naturel.

Lors de ce refroidissement, le matériau polymère thermoplastique des éléments de drainage 16 se solidifie.

Comme visible sur la figure 8, à la fin de l'étape 4, la pièce 35 est obtenue.

Le matériau polymère thermoplastique des éléments de drainage 16 forme des couches extérieures 40 en matériau polymère thermoplastique recouvrant une couche intérieure 41 comportant ledit matériau polymère injecté et un renfort fibreux.

Les reliefs 20 de l'élément de drainage 16a ont, lors de leur fusion, formé des surépaisseurs 42 sur les bords extérieurs de la pièce 35 obtenue.

Dans cet exemple, étant donné que le matériau polymère thermoplastique des éléments de drainage 16 et le matériau polymère injecté sont compatibles, les couches 40 ne peuvent pas être séparées de la couche intérieure 41.

La pièce 35 a, dans cet exemple, une épaisseur de 4 mm alors que l'épaisseur de la superposition de la préforme 15 et des éléments de drainage 16 était de 5 mm. La pièce 35 s'est donc rétractée au cours de l'étape de polymérisation.

Enfin, dans une cinquième étape 5, l'outillage 10 est ouvert et la pièce 35 est démoulée.

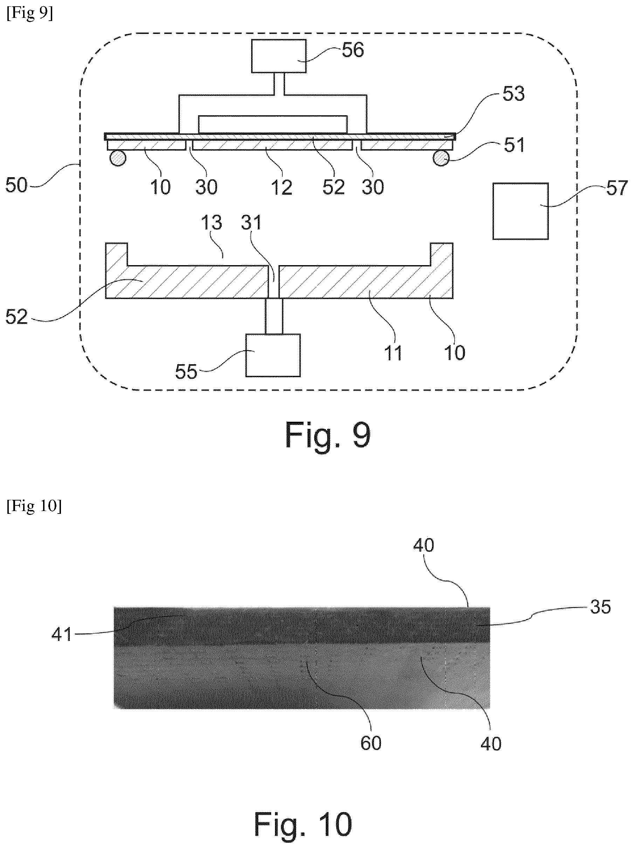

Le procédé peut être mis en œuvre avec l'exemple d'installation 50 selon l'invention illustrée sur la figure 9. Cette installation 50 comporte l'outillage 10 représenté sur la figure 9 dans une position ouverte.

Dans cet exemple, la première coquille 12 comporte des joints 51 destinés à améliorer l'étanchéité de la cavité fermée 25 formée lorsque l'outillage 10 est fermé. De plus, les joints 51 peuvent être compressés, comme illustré par exemple sur la figure 8, pour compenser la rétractation des éléments à l'intérieur de l'outillage 10 lors de la polymérisation et ainsi obtenir un état de surface de bonne qualité. De plus, cette compression permet d'obtenir une épaisseur désirée pour la pièce obtenue.

Dans cet exemple, l'installation 50 comporte un système de chauffage 52 compris dans la première coquille 11 et la deuxième coquille 12.

L'installation 50 comporte également un système d'injection 55 agencé pour injecter, dans au moins un orifice 31 réalisé dans la première coquille 11, un matériau polymère à une pression basse, notamment inférieure ou égale à 3 bars relativement à la pression atmosphérique, notamment à une pression égale à la pression atmosphérique.

L'installation 50 comporte encore un système d'aspiration 56, agencé pour faire le vide dans l'outillage 10 au travers d'au moins un évent 30 d'aspiration réalisé dans la deuxième coquille 12.

Dans l'installation 50 illustrée, la première coquille 11 comporte un unique orifice 31 disposé au centre de la cavité. L'orifice 31 est disposé de manière à se trouver sous la préforme 15, sensiblement face au centre de celle-ci. La deuxième coquille 12 comporte dans cet exemple deux évents 30 d'aspiration disposés sur la deuxième coquille 12 de manière à se trouver dans un plan transversal de part et d'autre de l'orifice 31, comme visible sur la figure 5.

L'installation 50 comporte également un dispositif 57 de fabrication additive configuré pour fabriquer ledit au moins un élément de drainage 16, directement dans l'outillage 10.

Dans cet exemple, l'installation 50 est dépourvue d'une bâche à vide.

L'installation 50 comporte une membrane 53 recouvrant extérieurement les évents 30, ladite membrane 53 étant perméable aux gaz et imperméable au matériau polymère injecté, par exemple une membrane VAP.

Des exemples de pièces 35 obtenues par la mise en œuvre du procédé dans l'installation 50 selon l'invention sont illustrées sur les figures 10 à 13.

Dans l'exemple de la figure 10, la pièce 35 comporte deux couches extérieures 40, formées par la fusion de deux éléments de drainage 16, entourant une couche intérieure 41 comportant ledit matériau polymère injecté et un renfort fibreux.

Dans cet exemple, les couches extérieures 40 servent de revêtement extérieur à la pièce 35, par exemple en remplacement d'une étape de peinture généralement mise en œuvre sur des pièces réalisées dans l'art antérieur. Les couches extérieures 40 ont, dans cet exemple, un texturage formant un paterne de motif 60.

De plus, aucune porosité n'est visible dans la pièce 35, notamment dans la couche intérieure 41, montrant que l'imprégnation est de bonne qualité.

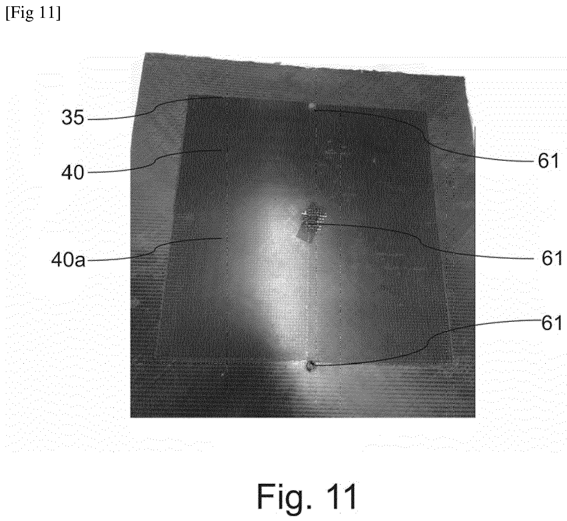

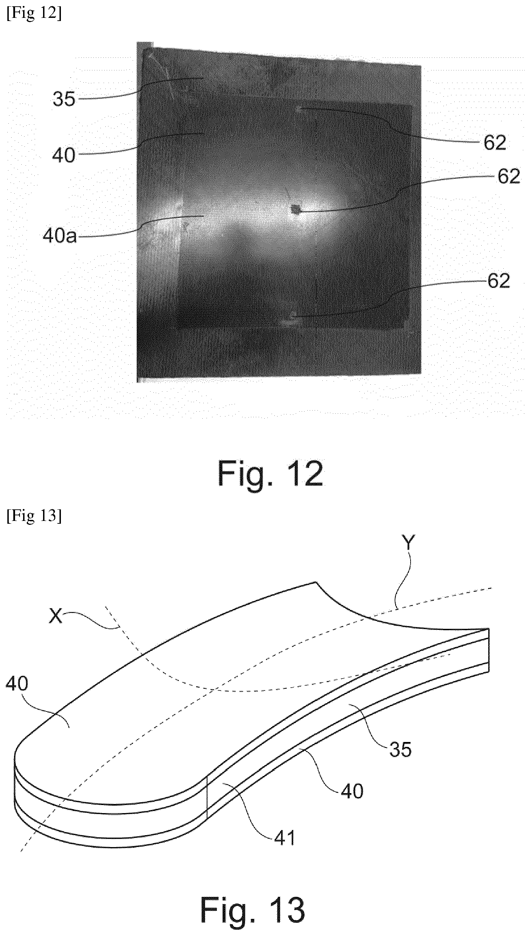

Dans l'exemple des figures 11 et 12, les couches extérieures 40 permettent d'apporter une couche d'absorption de chocs à la pièce 35 et ainsi renforcer sa résistance et donc augmenter sa durée de vie.

De plus, des marques 61 sont visibles sur la surface extérieure 40a issue de la fusion de l'élément de drainage 16a disposé du côté de la première coquille 11. Ces marques 61 ont pour origine les orifices d'injection 31 de la première coquille 11.

De même, des marques 62 sont visibles sur la surface extérieure 40b issue de la fusion de l'élément de drainage 16b disposé du côté de la deuxième coquille 12. Ces marques 62 ont pour origine les évents 30 de la deuxième coquille 12.

Dans l'exemple de la figure 13, la pièce 35 comporte une courbure selon l'axe incurvé X et une seconde courbure selon l'axe incurvé Y. La pièce 35 possède donc une double courbure.

L'invention n'est pas limitée aux exemples qui viennent d'être décrits.

En particulier, la forme de la première et la deuxième coquille peut être différente, par exemple comporter une ou plusieurs courbures.

Le matériau polymère thermoplastique du ou des éléments de drainage peut être incompatible avec le matériau polymère injecté. Dans ce cas, le procédé peut comporter le retrait d'une couche en matériau polymère thermoplastique obtenue par la fusion d'un élément de drainage, à la fin du procédé, par exemple lors du démoulage de la pièce ou après celui-ci.

Le système de chauffage de l'installation peut être différent, par exemple externe à l'outillage comme un autoclave.

Le nombre d'éléments de drainage peut être différent, étant par exemple compris entre deux et six.

La cavité 25 peut en variante être formée par la deuxième coquille 12 ou par le première coquille 11 et la deuxième coquille 12.

Le positionnement relatif ou absolu de la première et de la deuxième coquilles peut être différent sans sortir du cadre de l'invention. En particulier, la deuxième coquille peut être située sous la première coquille. En variante, la première et la deuxième coquilles peuvent être disposées côte-à-côte sans que l'un se trouve sous l'autre.

## Revendications

1. Procédé de fabrication, à partir d'une préforme (15) fibreuse, d'une pièce (35) en matériau composite dans un outillage (10) comportant une première et une deuxième coquilles (11, 12) et pouvant être ouvert ou fermé, le procédé comportant les étapes suivantes :
Etape a : disposer dans l'outillage (10) ouvert la préforme (15) fibreuse et au moins un élément de drainage (16) recouvrant au moins partiellement, inférieurement et/ou supérieurement, la préforme (15), ledit au moins un élément de drainage (16) étant fabriqué dans l'outillage (10),
Etape b : fermer l'outillage (10),
Etape c : injecter, à une pression basse, un matériau polymère dans l'outillage (10) par au moins un orifice (31) réalisé dans la première coquille (11) de manière à imprégner au moins partiellement la préforme (15) fibreuse avec ledit matériau polymère injecté, et
Etape d : provoquer la polymérisation dudit matériau polymère injecté de manière à former la pièce (35).

2. Procédé selon la revendication 1, l'étape a comportant la fabrication dans l'outillage (10) dudit au moins un élément de drainage (16) par un procédé de fabrication additive.

3. Procédé selon l'une des revendications 1 et 2, dans lequel, au cours de l'étape c, on fait le vide dans l'outillage (10) au travers d'au moins un évent (30) d'aspiration réalisé dans la deuxième coquille (12).

4. Procédé selon l'une quelconque des revendications précédentes, ledit au moins un élément de drainage (16) comportant des ajours (17), et formant notamment une grille, de manière à favoriser une circulation du matériau polymère injecté au sein de l'élément de drainage (16) au cours de l'étape c.

5. Procédé selon l'une quelconque des revendications précédentes, le ou les éléments de drainage (16) étant réalisé(s) en un matériau polymère thermoplastique, notamment choisi dans le groupe constitué par un acrylonitrile butadiène styrène (ABS), un polytéréphtalate d'éthylène (PET), un polyétherimide (PEI) et un mélange de ceux-ci, procédé dans lequel l'étape d comporte le chauffage du matériau polymère injecté à une température (Tₚ) supérieure à la température de fusion (T_{f}) du matériau polymère thermoplastique dudit au moins un élément de drainage (16),
dans lequel, au cours de l'étape c, le matériau polymère injecté est chauffé à une température (Tᵢ) inférieure à la température de fusion (T_{f}) du matériau polymère thermoplastique dudit au moins un élément de drainage (16).

6. Procédé selon l'une quelconque des revendications précédentes, dans lequel, au cours de l'étape c, la pression d'injection du matériau polymère est inférieure à 3 bar, notamment inférieure ou égale à 2 bar, de préférence proche de la pression atmosphérique.

7. Procédé selon l'une quelconque des revendications précédentes, dans lequel la préforme (15) fibreuse est prise en sandwich entre deux éléments de drainage (16).

8. Procédé selon l'une quelconque des revendications précédentes, dans lequel la préforme (15) fibreuse comporte des fibres longues.

9. Procédé selon l'une quelconque des revendications précédentes, comportant une étape de démoulage de la pièce (35), l'étape de démoulage comportant le retrait d'au moins un élément de drainage (16), ce dernier ne faisant pas partie de la pièce (35).

10. Procédé selon l'une quelconque des revendications précédentes, ledit au moins un élément de drainage (16) comportant un relief (20), procédé dans lequel le relief (20) forme, au cours de l'étape d, un relief (42) correspondant de la pièce et/ou le relief (20) local modifie au moins localement, au cours de l'étape c, la vitesse de circulation du matériau polymère dans l'outillage (10).

11. Procédé selon l'une quelconque des revendications précédentes, dans lequel le matériau polymère injecté comporte un matériau polymère thermodurcissable, notamment un polyépoxyde, un vinylester, un polyester et un mélange de ceux-ci.

12. Installation (50) pour la fabrication d'une pièce (35) en matériau composite à partir d'une préforme (15) fibreuse, l'installation (50) comportant un outillage (10) pouvant être ouvert ou fermé comportant :
- Une première coquille (11)
- Une deuxième coquille (12),
- la première et/ou la deuxième coquilles étant configurée pour recevoir la préforme (15) et au moins un élément de drainage (16),
- un système d'injection (55) agencé pour injecter, dans au moins un orifice (31) réalisé dans la première coquille (11), un matériau polymère à une pression basse, **caractérisée par**
- un dispositif (57) de fabrication additive configuré pour fabriquer ledit au moins un élément de drainage (16) directement dans l'outillage (10).

13. Installation (50) selon la revendication 12, comportant un système de chauffage (52) configuré pour chauffer la préforme (15) fibreuse et ledit au moins un élément de drainage (16) et/ou comportant un système d'aspiration (56), agencé pour faire le vide dans l'outillage (10) au travers d'au moins un évent (30) d'aspiration réalisé dans la deuxième coquille (12).

## Patentansprüche

1. Verfahren zur Herstellung eines Teils (35) aus Verbundwerkstoff aus einem Faservorformling (15) in einem Werkzeug (10), das eine erste und eine zweite Schale (11, 12) umfasst und geöffnet oder geschlossen werden kann, wobei das Verfahren die folgenden Schritte umfasst:
Schritt a: Anordnen des Faservorformlings (15) und mindestens eines den Vorformling (15) zumindest teilweise, unten und/oder oben, abdeckenden Drainageelements (16) in dem offenen Werkzeug (10), wobei das mindestens eine Drainageelement (16) in dem Werkzeug (10) hergestellt wird,
Schritt b: Schließen des Werkzeugs (10),
Schritt c: Einspritzen, bei niedrigem Druck, eines Polymermaterials durch mindestens eine in der ersten Schale (11) ausgeführte Öffnung (31) in das Werkzeug (10), so dass der Faservorformling (15) zumindest teilweise mit dem eingespritzten Polymermaterial imprägniert wird, und
Schritt d: Bewirken der Polymerisation des eingespritzten Polymermaterials, so dass das Teil (35) gebildet wird.

2. Verfahren nach Anspruch 1, wobei der Schritt a das Herstellen des mindestens einen Drainageelements (16) in dem Werkzeug (10) durch ein Verfahren zur additiven Fertigung umfasst.

3. Verfahren nach einem der Ansprüche 1 und 2, bei dem während des Schrittes c das Werkzeug (10) durch mindestens eine in der zweiten Schale (12) ausgeführte Abzugsöffnung (30) evakuiert wird.

4. Verfahren nach einem der vorhergehenden Ansprüche, wobei das mindestens eine Drainageelement (16) Durchbrüche (17) umfasst und insbesondere ein Gitter bildet, so dass eine Zirkulation des eingespritzten Polymermaterials in dem Drainageelement (16) während des Schritts c begünstigt wird.

5. Verfahren nach einem der vorhergehenden Ansprüche, wobei das oder die Drainageelemente (16) aus einem thermoplastischen Polymermaterial ausgeführt ist(sind), das insbesondere ausgewählt ist aus der Gruppe bestehend aus einem Acrylnitril-Butadien-Styrol (ABS), einem Polyethylenterephthalat (PET), einem Polyetherimid (PEI) und einer Mischung davon, wobei bei dem Verfahren der Schritt d das Erwärmen des eingespritzten Polymermaterials auf eine Temperatur (Tₚ) über der Schmelztemperatur (T_{f}) des thermoplastischen Polymermaterials des mindestens einen Drainageelements (16) umfasst,
wobei während des Schritts c das eingespritzte Polymermaterial auf eine Temperatur (Tᵢ) unter der Schmelztemperatur (T_{f}) des thermoplastischen Polymermaterials des mindestens einen Drainageelements (16) erwärmt wird.

6. Verfahren nach einem der vorhergehenden Ansprüche, bei dem während des Schritts c der Einspritzdruck des Polymermaterials kleiner als 3 bar, insbesondere kleiner oder gleich 2 bar, vorzugsweise nahe dem Atmosphärendruck ist.

7. Verfahren nach einem der vorhergehenden Ansprüche, wobei der Faservorformling (15) sandwichartig zwischen zwei Drainageelementen (16) aufgenommen ist.

8. Verfahren nach einem der vorhergehenden Ansprüche, wobei der Faservorformling (15) lange Fasern umfasst.

9. Verfahren nach einem der vorhergehenden Ansprüche, umfassend einen Schritt des Entformens des Teils (35), wobei der Schritt des Entformens das Entfernen mindestens eines Drainageelements (16) umfasst, wobei Letzteres nicht zu dem Teil (35) gehört.

10. Verfahren nach einem der vorhergehenden Ansprüche, wobei das mindestens eine Drainageelement (16) ein Relief (20) umfasst, wobei das Relief (20) bei dem Verfahren während des Schritts d ein entsprechendes Relief (42) des Teils bildet und/oder das lokale Relief (20) zumindest lokal, während des Schritts c, die Zirkulationsgeschwindigkeit des Polymermaterials in dem Werkzeug (10) ändert.

11. Verfahren nach einem der vorhergehenden Ansprüche, wobei das eingespritzte Polymermaterial ein duroplastisches Polymermaterial, insbesondere ein Polyepoxid, einen Vinylester, einen Polyester und eine Mischung davon umfasst.

12. Anlage (50) zur Herstellung eines Teils (35) aus Verbundwerkstoff aus einem Faservorformling (15), wobei die Anlage (50) ein Werkzeug (10) umfasst, das geöffnet oder geschlossen werden kann, umfassend:
- eine erste Schale (11)
- eine zweite Schale (12),
- wobei die erste und/oder die zweite Schale dazu ausgebildet ist(sind), den Vorformling (15) und mindestens ein Drainageelement (16) aufzunehmen,
- ein Einspritzsystem (55), das dazu ausgelegt ist, in mindestens eine in der ersten Schale (11) ausgeführte Öffnung (31) ein Polymermaterial mit einem niedrigen Druck einzuspritzen, **gekennzeichnet durch**
- eine Vorrichtung (57) zur additiven Fertigung, die dazu ausgebildet ist, das mindestens eine Drainageelement (16) direkt in dem Werkzeug (10) herzustellen.

13. Anlage (50) nach Anspruch 12, die ein Heizsystem (52) umfasst, das dazu ausgebildet ist, den Faservorformling (15) und das mindestens eine Drainageelement (16) zu erwärmen, und/oder die ein Absaugsystem (56) umfasst, das dazu ausgelegt ist, das Werkzeug (10) durch mindestens eine in der zweiten Schale (12) ausgeführte Abzugsöffnung (30) zu evakuieren.

## Claims

1. Method for manufacturing, from a fibrous preform (15), a part (35) made of composite material in a tool (10) which comprises a first and a second shell (11, 12) and which can be open or closed, the method comprising the following steps:
Step a: disposing, in the open tool (10), the fibrous preform (15) and at least one drainage element (16) at least partially covering, at the bottom and/or at the top, the preform (15), said at least one drainage element (16) being manufactured in the tool (10),
Step b: closing the tool (10),
Step c: injecting, at a low pressure, a polymer material into the tool (10) through at least one orifice (31) made in the first shell (11) so as to at least partially impregnate the fibrous preform (15) with said injected polymer material, and
Step d: bringing about the polymerization of said injected polymer material so as to form the part (35).

2. Method according to Claim 1, step a comprising manufacturing said at least one drainage element (16) in the tool (10) by an additive manufacturing method.

3. Method according to either of Claims 1 and 2, wherein, during step c, the tool (10) is evacuated through at least one suction vent (30) made in the second shell (12).

4. Method according to any one of the preceding claims, said at least one drainage element (16) comprising perforations (17), and in particular forming a grating, so as to promote circulation of the injected polymer material within the drainage element (16) during step c.

5. Method according to any one of the preceding claims, the drainage element(s) (16) being made of a thermoplastic polymer material, in particular selected from the group consisting of an acrylonitrile butadiene styrene (ABS), a polyethylene terephthalate (PET), a polyetherimide (PEI) and a mixture thereof, wherein step d of the method comprises heating the injected polymer material to a temperature (Tₚ) higher than the melting point (T_{f}) of the thermoplastic polymer material of said at least one drainage element (16),
wherein, during step c, the injected polymer material is heated to a temperature (Tᵢ) lower than the melting point (T_{f}) of the thermoplastic polymer material of said at least one drainage element (16).

6. Method according to any one of the preceding claims, wherein, during step c, the injection pressure of the polymer material is less than 3 bar, in particular less than or equal to 2 bar, preferably close to atmospheric pressure.

7. Method according to any one of the preceding claims, wherein the fibrous preform (15) is sandwiched between two drainage elements (16).

8. Method according to any one of the preceding claims, wherein the fibrous preform (15) comprises long fibres.

9. Method according to any one of the preceding claims, comprising a step of demoulding the part (35), the demoulding step comprising the removal of at least one drainage element (16), the latter not forming part of the part (35).

10. Method according to any one of the preceding claims, said at least one drainage element (16) comprising a relief (20), wherein the relief (20), during step d of the method, forms a corresponding relief (42) of the part and/or the local relief (20), during step c, at least locally modifies the speed of circulation of the polymer material in the tool (10).

11. Method according to any one of the preceding claims, wherein the injected polymer material comprises a thermosetting polymer material, in particular a polyepoxide, a vinyl ester, a polyester and a mixture thereof.

12. Installation (50) for manufacturing a part (35) made of composite material from a fibrous preform (15), the installation (50) comprising a tool (10) which can be open or closed and comprises:
- a first shell (11),
- a second shell (12),
- the first and/or the second shell being configured to receive the preform (15) and at least one drainage element (16),
- an injection system (55) arranged to inject, into at least one orifice (31) made in the first shell (11), a polymer material at a low pressure, **characterized by**
- an additive manufacturing device (57) configured to manufacture said at least one drainage element (16) directly in the tool (10).

13. Installation (50) according to Claim 12, comprising a heating system (52) configured to heat the fibrous preform (15) and said at least one drainage element (16) and/or comprising a suction system (56), arranged to evacuate the tool (10) through at least one suction vent (30) made in the second shell (12).
